Europäisches Patentamt

European Patent Office

Office européen des brevets

(11) Publication number: **0 113 961**
A1

# EUROPEAN PATENT APPLICATION

(21) Application number: 83307262.2

(22) Date of filing: 29.11.83

(51) Int. Cl.³: **G 01 K 11/26**

(30) Priority: 29.11.82 GB 8233956

(43) Date of publication of application: 25.07.84
Bulletin 84/30

(84) Designated Contracting States: **AT BE CH DE FR GB IT LI LU NL SE**

(71) Applicant: **Babcock Power Limited, Maypole House 128-132, Borough High Street, London SE1 4YB (GB)**

(72) Inventor: **Webster, Dennis Hubert, 29 Benenden Road, Wainscott Rochester Kent (GB)**

(74) Representative: **Lewis, David Overington, c/o Babcock International plc Cleveland House 19 St. James's Square, London SW1Y 4LN (GB)**

(54) Improvements relating to estimating combustion chamber temperatures.

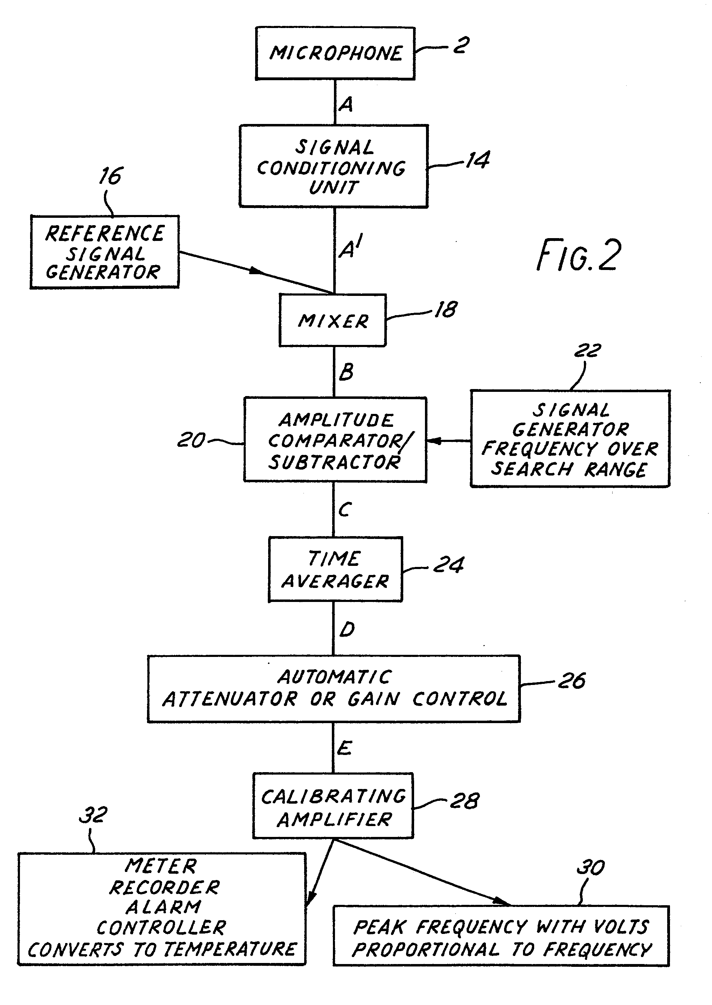

(57) The temperature within a combustion chamber is gauged or estimated by analysing the noise within the chamber evoked by inherent sound generating properties of burners discharging to the chamber for resonant frequencies. Noise received by a microphone 6 (Figure 2) is converted to a fluctuating voltage and mixed with a reference signal at 18. The signal is processed in an amplitude comparator/subtractor 20 and time averaged to give a signal of amplitude varying in relation to frequency. From this, peak resonant frequency is derived and together with a knowledge of the velocity of sound within the combustion gases and the distance between opposed walls of the chamber, gives an indication of the temperature. Both the peak resonant frequency and the temperature signals may be displayed or used for control purposes.

FIG.2

**0113961**

## "IMPROVEMENTS RELATING TO ESTIMATING COMBUSTION CHAMBER TEMPERATURES."

### DESCRIPTION.

This invention relates to the gauging or estimating of combustion chamber temperatures.

Large water tube boilers for, for example, power stations, may be coal and/or oil and/or gas fired through a wall of a combustion chamber with water-cooled walls, floor and roof, which radiantly absorb a large proportion of the heat released by the fuel. The burning fuel and combustion products move away from the burner zone to the combustion chamber outlet which is commonly the outlet to a gas path containing convectively heated tube banks including steam superheating tube banks, frequently in addition reheating tube banks, economizer tube banks and a combustion air heater.

In order to check whether a boiler operates over its range of loads as it is designed to do as well as to collect data facilitating the improved designing of subsequent boilers means may be provided for intermittently or continuously measuring or monitoring numerous variables in addition to the basic boiler variables of steam temperatures, steam pressures and steam, fuel and air flow rates.

The collection of data to measure the performances of the various banks in the convention gas path may pose few problems but the collection of data as regards the performance and operation of the combustion chamber may be more difficult in view of the high temperatures involved. In recent years heat flux probes have been devised for measuring the distribution over the combustion chamber bounds of the heat flux from the burning fuel and combustion products radiated to the working fluid tubes cooling the combustion chamber walls, floor and roof but as regards the gauging or estimating of the combustion chamber temperature at the firing zone, which is a variable that is of considerable utility for the purposes mentioned, the difficulties arise that instruments inserted in the firing space on lances will or may readily become heat damaged while radiation instruments such as pyrometers, for example, require a calibrating for the specific duty that begs the question.

According to the present invention there is provided a method of gauging or estimating combustion chamber temperatures by reference to an acoustic resonance between an opposed pair of walls of the combustion chamber that is evoked by inherent sound generating properties of burners discharging into the combustion chamber.

The invention will now be described, by way of example, with reference to the accompanying drawings, in which:-

Figure 1 is a cross-sectional elevation of a portion of a combustion chamber wall indicating the positioning of a microphone;

Figure 2 is a block diagram indicating units of electronic circuitry arranged to process signals derived from the microphone;

Figures 3A, 3A', 3B, 3C, 3D, 3M and 3M' are indications of plots derivable at points in the circuity depicted in the block diagram.

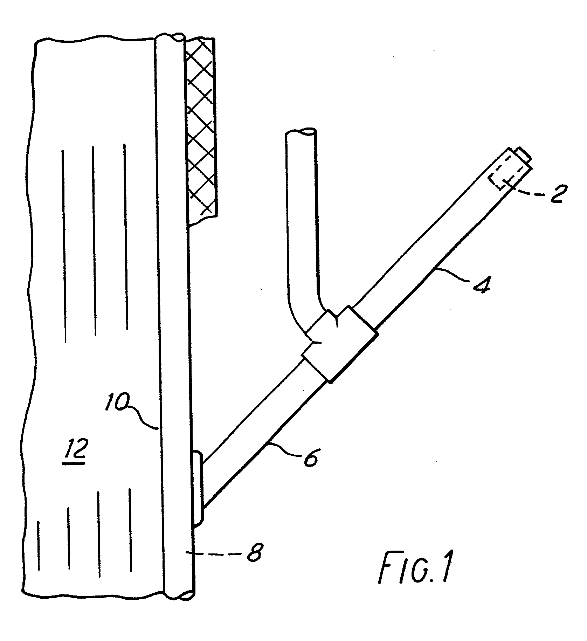

As shown in Figure 1, a microphone 2 is positioned in an extension 4 of a draught tapping tube 6 inclined upwardly and outwardly from an aperture 8 in a tube-lined wall 10 of a combustion chamber 12. The wall 12 accommodates burner means (not shown) discharging to the combustion chamber and the aperture 8 is positioned above the firing zone of the burners. It will be appreciated that other locations of the microphone may be selected provided that the noise within the combustion chamber is received well enough for a good signal to be generated. By siting the microphone 2 in the extension 4 of the draught tapping tube 6 a relatively cool location is achieved having a direct line-of-sight sound travel path into the combustion chamber.

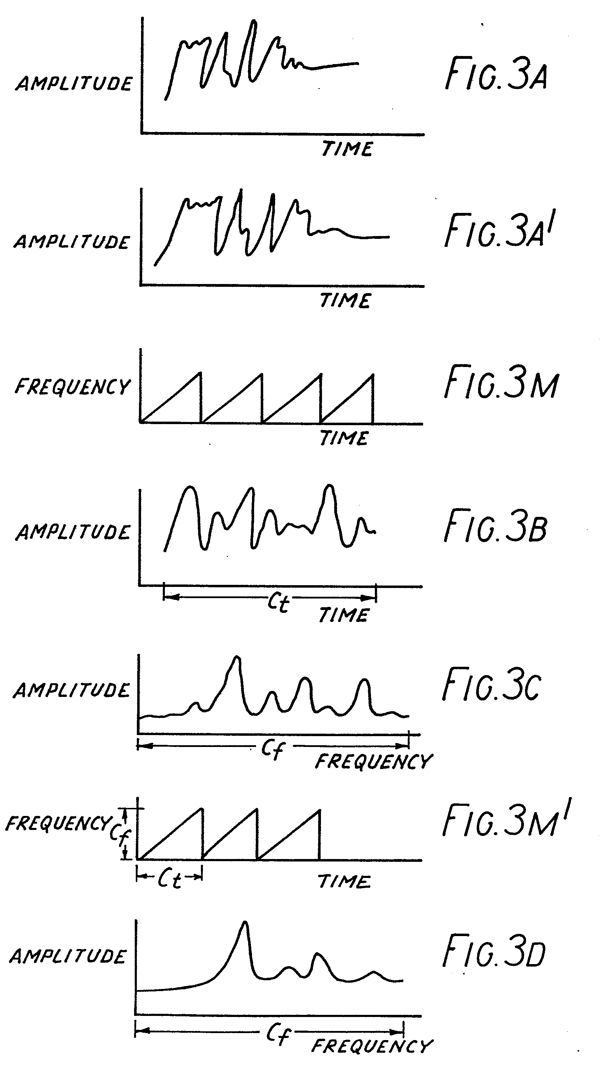

As indicated in Figures 2 and 3, the signal output from the microphone is fed to a signal conditioning unit 14 in which the total fluctuating signal is converted to a fluctuating voltage. Plots of amplitude against time taken of the respective outputs from the microphone 6 at A and the signal conditioning unit 14 at A' are, as indicated in Figures 3A and 3A', similar. A signal produced by a reference signal generator 16 of the form of a sine wave either of fixed frequency or of a frequency controlled in relation to time and having a shape as indicated in the plot of frequency against time in Figure 3M is imposed on the signal at A' in a mixer circuit 18. A plot of amplitude against time of the output from the mixer circuit 18 at B is indicated in Figure 3B and is such that the signal amplitude corresponds to decoded specific freqeuncy at any instant, that is, variable intermediate frequency. This signal is then fed to an amplitude comparator/subtractor unit 20 and mixed with a reference signal of the form shown in Figure 3M' from a reference signal generator 22 set to produce frequencies over the search range to give an output signal of the form indicated in Figure 3C in which amplitude is plotted against frequency. This signal is then processed in a time averager unit 24 to give a steady output of the form indicated in Figure 3D again with amplitude plotted against frequency but with transient fluctuations averaged out over a series of cycles. The output signal from the time averager 24 is then processed in an automatic attentuator or gain control unit 26 to produce at E a signal which is a measure of the gain or attenuation required to raise the amplitude of a specific frequency above or below a specific threshold. The specific frequency selected is the peak frequency obtained and corresponds to the fundamental resonant frequency. The value of the specific frequency may be displayed by means of a converter unit 30 which serves to convert the signal to to a voltage proportional to the frequency. Additionally, or alternatively, the signal from the calibrating amplifier 28 is fed to a processing unit 32 to visual or audible indications and control signals dependent on the value of the temperature derived from the frequency and a knowledge of the distance between the front and rear walls which will correspond to a half wavelength of the resonant frequency and of the velocity of sound in the gases in the combustion chamber.

Within limits, the velocity of sound in flue gases arising from burning a wide range of fuels approximates to the velocity of sound in air. However, more accurate figures are available for typical analyses of flue gases. Adjustments, however, do need to be made to take into account the particle and the moisture contents of the gases. These adjustments may be made on the basis of published data and an analysis of the fuel being burnt together with practical experience of the solid particle burden in the combustion chamber and an indication of the moisture content of solid fuels from the drop in temperature of drying air contacting coal delivered from pulverising mills before discharge through burners to the combustion chamber. Conveniently, curves may be drawn for typical flue gas analyses with varying moisture and dust contents to give close approximations to the value of the velocity of sound obtaining in a combustion chamber given a knowledge of the firing conditions. Alternatively, a continuous sample may be taken of the moisture and particle containing flue gases at a lower temperature region of the plant associated with the combustion chamber, which temperature may be measured accurately, and measuring the velocity of sound in the flue gases at the known temperature.

The indication of the maximum temperature in the combustion chamber may be utilised in the control of the burners to limit the formation of $NO_x$ products. In addition, since, in normal operation, the position of the peak frequency should not vary to any appreciable extent, any marked variation would indicate an unbalance or instability in the output from the burners and may be utilised in adjusting the burners to achieve balanced conditions.

For a combustion chamber of rectangular cross-section, two fundamental resonant frequencies will occur, corresponding to the front to rear dimension and to the side to side dimension. The two fundamental resonant frequencies are identified by the electronic circuitry and, if required, are utilised to compare mean temperatures in the two directions. Differences between the two mean temperatures gives an indication of the heat release pattern in the combustion chamber, and can be used to assist in trimming combustion by adjustment of the burner controls.

The shape of the plots of frequency against amp-litidue will vary according to the amount of temperature difference between the hottest and the coolest parts of the combustioon chamber, wider differences producing flatter plots. Thus an examination of the plots either by means of a cathode ray oscilloscope or by electronic digital techniques will give an indication of the variations in the temperature within the combustion chamber. For example, an indication of the gas temperature at the exit of the combustion chamber may be obtained by taking a cross-point between, say, 50% above the basic noise level in the plot and the resonance line. Such an indication of the exit gas temperature may be utilised in control of the burners to reduce or avoid slagging and fouling.

It will be appreciated that electronic digital techniques may be utilised through the electronic circuity to identify and isolate the various frequencies and to convert them to temperature indications.

0113961

- 8 -

CLAIMS

1. A method of gauging or estimating combustion chamber temperatures by reference to an acoustic resonance between an opposed pair of walls of the combustion chamber that is evoked by inherent sound generating properties of burners discharging into the combustion chamber.

2. A method of gauging or estimating combustion chamber temperatures as claimed in Claim 1, wherein noise arising in the combustion chamber is converted into an electrical signal through a microphone, the output electrical signal from the microphone is conditioned electronically to distinguish peak frequencies and select the peak frequency corresponding to the fundamental resonant frequency and indication is given of the value of the fundamental resonant frequency.

3. A method of gauging or estimating combustion chamber temperatures as claimed in Claim 2, wherein a signal indicative of the fundamental resonant frequency is compared with a signal indicative of the velocity of sound in the combustion chamber to derive a signal indicative of the temperature within the combustion chamber.

4. A method of gauging or estimating combustion chamber temperatures as claimed in Claim 3, wherein the signal indicative of the velocity of sound in the combustion chamber is derived from the figure for the velocity of sound in flue gases adjusted to take into account approximate moisture and dust content of the flue gases within the combustion chamber.

5. A method of gauging or estimating combustion chamber temperature as claimed in Claim 3, wherein the signal indicative of the velocity of sound in the combustion chamber is derived from a continuous sample of gases and entrained dust and moisture exiting from the combustion chamber and cooled to a lower, measurable, temperature.

6. Apparatus for gauging or estimating combustion chamber temperature including means for producing a signal derived from noise arising in the combustion chamber evoked by inherent sound generating properties of burners discharging into the combustion chamber, means for analysing said signal to distinguish peak frequencies and select the peak frequency corresponding to the fundamental resonant frequency and means giving an indication of the value of said resonant frequency.

7. Apparatus for gauging or estimating combustion chamber temperature as claimed in Claim 6, wherein means are provided to compare the value of said resonant frequency with a value for the velocity of sound within the combustion chamber and give an indication of the temperature within the combustion chamber derived therefrom.

8.    Apparatus for gauging or estimating combustion chamber temperature as claimed in Claim 7, wherein a portion of the gases containing dust and moisture exiting from the combustion chamber are cooled and passed through means arranged to measure the velocity of sound therein together with the temperature to give the value for the velocity of sound within the combustion chamber.

9.    Apparatus for gauging or estimating combustion chamber temperature arranged and adapted to operate substantially as hereinbefore described in conjunction with the accompanying drawings.

FIG.1

FIG.2

3/3

0113961

FIG.3A

FIG.3A'

FIG.3M

FIG.3B

FIG.3C

FIG.3M'

FIG.3D

0113961

Application number

EP 83 30 7262

# EUROPEAN SEARCH REPORT

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-2 037 989 (KRUPP-KOPPERS GmbH) * Figures; introduction; page 1, lines 40-112 * | 1,2,6 | G 01 K 11/26 |
| X | AU-A- 413 893 (JOSEPH LUCAS (INDUSTRIES) LTD) * Introduction; figure 2; page 2, paragraph 5 - page 3, paragraph 3 * | 1,2,6 | |
|  |  |  | **TECHNICAL FIELDS SEARCHED (Int. Cl. ³)** |
|  |  |  | G 01 K 11/00 G 01 K 3/00 |

The present search report has been drawn up for all claims

| Place of search | Date of completion of the search | Examiner |
|---|---|---|
| THE HAGUE | 21-03-1984 | VISSER F.P.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82